# EUROPÄISCHE PATENTSCHRIFT

(11) **EP 1 230 172 B1**
(45) Veröffentlichungstag und Bekanntmachung des Hinweises auf die Patenterteilung: **02.03.2005**
(21) Anmeldenummer: 00965736.2
(22) Anmeldetag: 17.10.2000
(51) Int. Cl.: C02F 3/12, B01D 21/24, B01D 21/02

(54) **VERFAHREN UND VORRICHTUNG ZUR BIOLOGISCHEN ABWASSERREINIGUNG**
METHOD AND DEVICE FOR BIOLOGICALLY PURIFYING WASTE WATER
PROCEDE ET DISPOSITIF D'EPURATION BIOLOGIQUE D'EAUX USEES

(30) Priorität: 19.10.1999 CZ 370599
(43) Veröffentlichungstag der Anmeldung: 14.08.2002
(73) Patentinhaber: Envi-Pur, S.R.O., 390 03 Tabor (CZ)
(72) Erfinder: DRDA, Milan;, 391 43 Mladá Vozice (CZ)
(74) Vertreter: Jeck, Anton, Dipl.-Ing.
(86) Internationale Anmeldenummer: PCT/CZ2000/000077
(87) Internationale Veröffentlichungsnummer: WO 2001/028935

(56) Entgegenhaltungen:
- EP-A- 0 968 965
- DE-A- 2 136 871
- GB-A- 1 354 126
- US-A- 5 234 580
- US-A- 5 275 732
- US-A- 5 744 037

## Beschreibung

Die Vorliegende Erfindung betrifft ein Verfahren zur biologischen Abwasserreinigung, in dessen Verlauf das zu klärende Wasser, nach seiner mechanischen Vorreinigung, dem Prozess des biologischen Abbaus der Verunreinigung durch Belebtschlamm unterworfen wird, unter Bedingungen, die aerobisch und/oder anoxidisch und/oder anaerobisch sind, mit nachfolgender Sedimentierung, wobei der Belebtschlamm in den Reinigungsprozess zurückgeführt und sein Überschuss ausserhalb dieses Prozesses abgeführt wird.

Die Erfindung betrifft auch eine Vorrichtung zum Durchführen dieses Verfahrens, die einen Korb zur mechanischen Vorreinigung mit vorgeschaltetem Einlauf des zu reinigenden Abwassers, einen Belebungsraum mit Belüftungselementen, ein Nachklärbecken mit Einlaufzylinder, eine Rezirkulationspumpe für Schlamm zum Pumpen des Belebtschlammes vom Boden des Nachklärbeckens in die Einlaufzone des Belebungsraumes und den Abfluss des geklärten Wassers besitzt.

Ein Verfahren zur biologischen Reinigung von Abwasser ist bekannt, in dessen Verlauf das zu klärende Wasser, nach seiner mechanischer Vorreinigung, dem Prozess des biologischen Abbaus von Verunreinigung durch Belebtschlamm unterworfen wird, unter Bedingungen, die aerobisch und/oder anoxidisch und/oder anaerobisch sind, mit nachfolgender Sedimentierung, wobei der Belebtschlamm in den Reinigungsprozess zurückgeführt und sein Überschuss ausserhalb dieses Prozesses abgeführt wird.

Das obige Verfahren wird in verschiedenen Abwasserkläranlagen eingesetzt, beginnend mit kleinen Hauskläranlagen bis zu Kläranlagen für grössere Zahlen von Äquivalenteinwohnem.

Es ist bekannt, dass es bei Anwendung dieses Verfahren, d.h. im Betrieb dieser Abwasserkläranlagen, im Verlauf der Sedimentierung zum Herausschwemmen schwebender Verunreinigungen und des Belebtschlamms auf die Oberfläche des Nachklärbeckens kommt. Dieser Effekt ist insbesondere bei kleineren Kläranlagen aus Gründen beträchtlicher Unregelmässigkeiten des Einlaufes des zu klärenden Abwassers recht häufig. Die Beseitigung schwimmender Verunreinigungen mit Schlamm wird bei grösseren Kläranlagen des öfteren mit einer Spezialvorrichtung gelöst, die solche Verunreinigungen von der Oberfläche des Nachklärbeckens abstreift oder abpumpt.

Bei kleineren Kläranlagen, wo das Vorkommen solcher unerwünschter Erscheinungen häufig und die Menge schwimmender Verunreinigungen und Schlamm beträchtlich ist, gibt es aus ökonomischen Gründen in der Regel keine Vorrichtung zum Beseitigen schwimmender Verunreinigungen mit Schlamm, und die Beseitigung dieser Verunreinigungen und des Schlamms erfolgt in der Regel manuell. Bei der Beseitigung ist mit den schwimmenden Verunreinigungen auch der schwimmende Schlamm zu beseitigen, der oft ein Vielfaches der schwimmenden Verunreinigungen ausmacht, oder aber muss die Gasphase vom herausgeschwommenen Belebtschlamm mechanisch herausgemischt werden, um den herausgeschwommenen Schlamm vom System der Abwasserreinigung von den schwimmenden Verunreinigungen zu trennen, wodurch die Mengen der von der Oberfläche des Nachklärbeckens zu beseitigenden Verunreinigungen wesentlich gemindert wird.

Dieses Verfahren zum Beseitigen schwimmender Verunreinigungen ist zeitlich recht anspruchsvoll und beim Vermischen des schwimmenden Belebtschlamms beim gleichzeitigen Einlauf des zu reinigenden Abwassers kommt es zum Entrinnen dieses Belebtschlammes in den Abfluss, was zur beträchtlichen Verschlechterung der Endparameter des geklärten Wassers führt.

Bei Systemen der Abwasserreinigung, in denen zur Sedimentierung des Belebtschlammes ein vertikales Nachklärbecken eingesetzt wird, sind die schwimmenden Verunreinigungen vom im Nachklärraum angeordneten Einlaufzylinder manuell zu beseitigen. Auch in diesem Einlaufzylinder verbleiben in der Regel schwimmende Verunreinigungen zugleich mit dem herausgeschwemmten Belebtschlamm, was die Menge der vom System zu beseitigenden Stoffe erhöht.

Durch die WO-A-97 08104 ist ein Verfahren gemäß dem Oberbegriff des Anspruchs 1 bekannt. Dort ist eine in Höhe des Wasserarbeitspegels angeordnete Rückströmung vom Sedimentationsbecken ins Belebungsschlammbecken vorgesehen. Das Reinwasserabflussrohr des zweiten Beckens ist unterhalb dieses Arbeitspegels angeordnet.

Durch die GB-A-1 354 126 ist eine Vorrichtung zur Ausführung des bereits durch die vorstehende Schrift bekannten Verfahrens bekannt. Dort werden die im Oberbegriff des Anspruchs 1 der vorliegenden Erfindung genannten Komponenten verwendet. Der schwimmende Verunreinigungen absaugende Stutzen liegt weit unterhalb des Arbeitspegels, und vom Arbeitspegel aus wird das Wasser mittels eines Überlaufs in ein nächstes Becken geleitet.

Die Erfindung stellt sich als Aufgabe, die oben genannten Nachteile zu beseitigen oder zumindest erheblich zu vermindern.

Diese Aufgabe wird mit den Merkmalen des Anspruchs 1 bzw. mit den Merkmalen des Anspruchs 2 gelöst.

Vorteilhaft ist eine Ausführung, bei der die Pumpe zum Senken des Betriebspegels, die Quelle des intensiven Vermischens des Inhalts des Nachklärbeckens, die Absaugpumpe und die Rezirkulationspumpe für Schlamm als Mammutpumpen ausgerührt sind.

Ein weiteres Merkmal besteht darin, dass die Einlaufzone, in der der Korb zur mechanischen Vorreinigung angeordnet ist, durch eine Tauchwand räumlich begrenzt ist.

Ein weiterer wesentlicher Punkt der Erfindung besteht darin, dass im Eintrittsteil der Abfuhr des geklärten Wassers, in den Abflussraum mündend, ein Überlauf gebildet ist, der die Höhe des Betriebspegels definiert, dahinter mündet die Pumpe zur Senkung des Betriebspegels, wobei der Abflussraum durch einen Teil des Nachklärbeckenmantels abgegrenzt ist, der einen Durchgang, eine Schrägwand und Seitenwände besitzt.

Um einen zuverlässigen Verlauf des Klärprozesses zu erzielen, ist gemäss der Erfindung eine Ausfuhrung vorteilhaft, nach der die Quelle zur intensiven Mischung des Inhalts des Nachklärbeckens, die Rezirkulationspumpe für Schlamm, die Pumpe zur Senkung des Betriebspegels sowie die Absaugpumpe auf einen mit einer Druckluftquelle verbundenen Luftverteiler angeschlossen sind, wobei der Luftverteiler und die Druckluftquelle von einer programmierbaren Steuereinheit gesteuert werden.

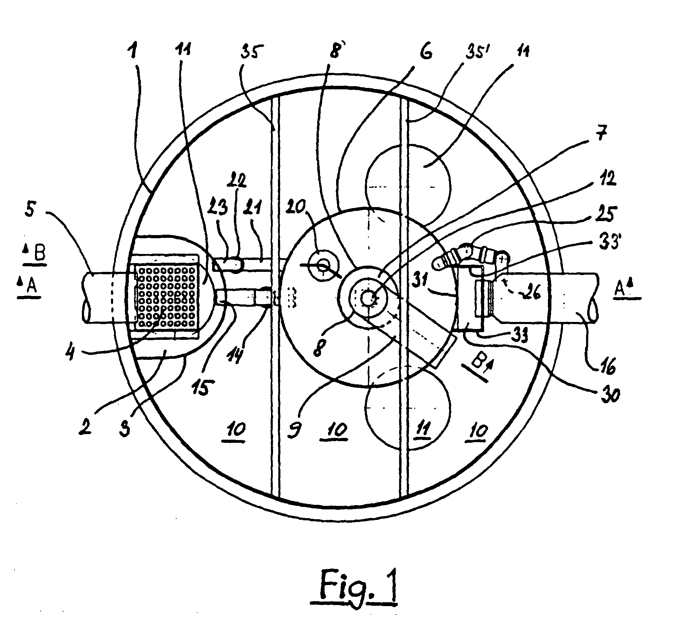

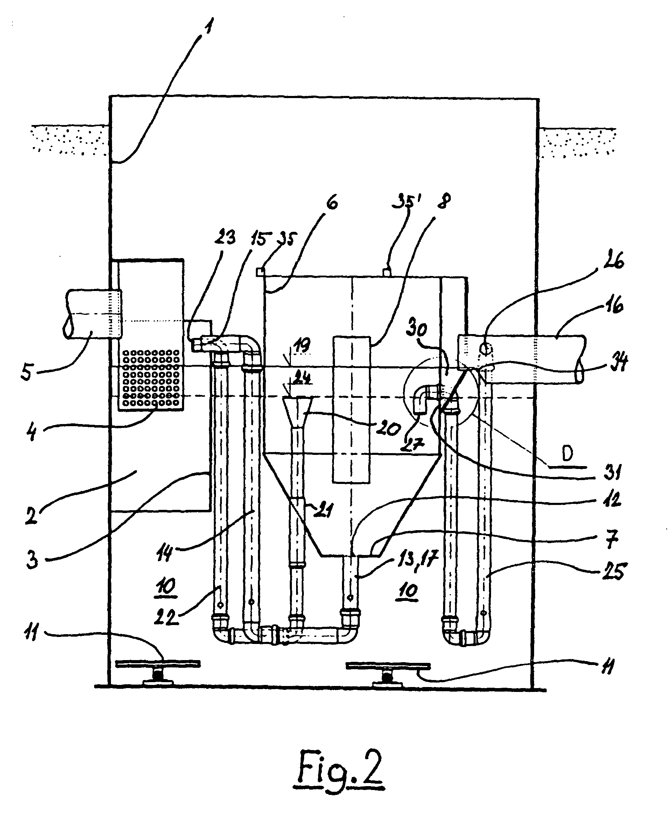

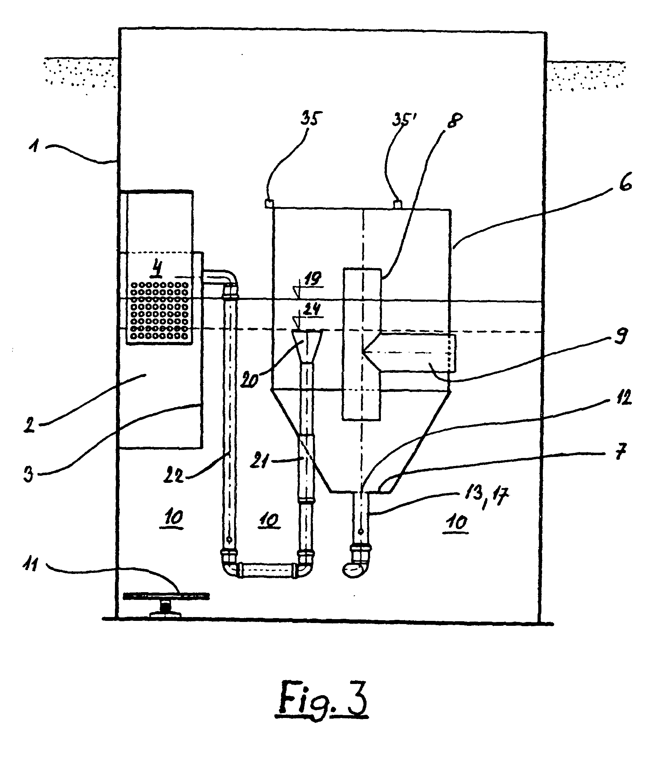

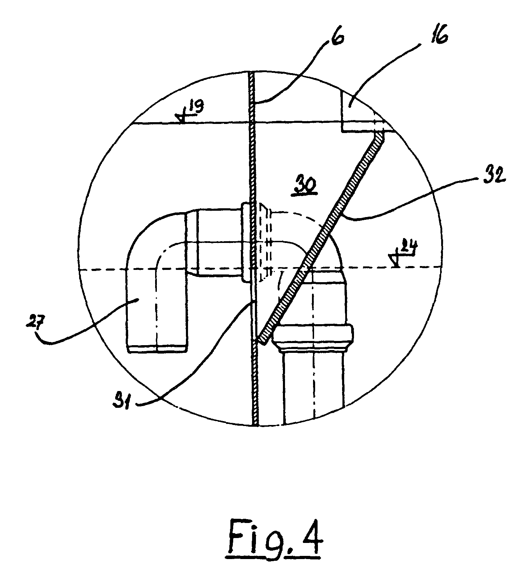

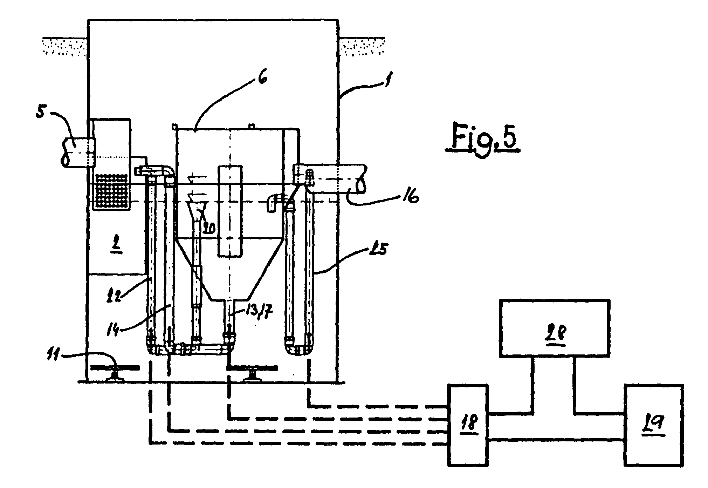

Die Erfindung wird in der Folge anhand der angeschlossenen Zeichnungen näher beleuchtet, wo Bild 1 die biologische Kläranlage im Grundriss veranschaulicht, ohne Deckel, in Ausführung, die zum Einsatz als Hauskläranlege bestimmt ist, Bild 2 ist ein Schnitt durch die Kläranlage nach Bild 1 in der Ebene A - A, Bild 3 ist ein Schnitt durch die Kläranlage nach Bild 1 in Ebenen B - B ohne Abbildung des Abflussteils und einer Pumpe zum unterbrochenen Senken des Pegels, Bild 4 ist ein vergrössertes Detail D gekennzeichnet in Bild 2 und Bild 5 ist ein Schnitt durch die Kläranlage nach Bild 2 mit schematisch dargestellter Druckluftquelle.

Im Becken 1, in seiner Einlaufzone 2, begrenzt durch Tauchwand 3, befindet sich der Korb 4 zur mechanischen Vorreinigung des zu klärenden Abwassers, das durch Einlauf 5 in den Korb gelangt.

Weiters ist im Becken 1 das Nachklärbecken 6 mit Boden 7 angeordnet. Im Nachklärbecken 6 ist der Einlaufzylinder 8 mit Einlaufaufsatz 9 entsprechend Bild 3 angeordnet, der in den Belebungsraum 10 des Beckens 1 mündet, in dessen unterem Teil sich die Belüftungselemente 11 befinden, die an eine nicht dargestellte Druckluftquelle angeschlossen sind. Im Boden 7 des Nachklärbeckens 6 ist die Öffnung 12 gebildet, auf die die Schlammleitung 13 angeschlossen ist, die mit der Rezirkulationspumpe 14 für Schlamm verbunden ist, deren Auslaufstutzen 15 über die Oberfläche der Einlaufzone 2 herausführt. Die Rezirkulationspumpe 14 für Schlamm wird vorzugsweise als Mammutpumpe ausgeführt, die, wie auf Bild 5 dargestellt, mit dem Luftverteiler 18 verbunden ist. Zur Abfuhr des geklärten Wassers vom Nachklärbecken 6 dient die Abfuhr 16 des geklärten Wassers. Die beschriebene Anordnung ist allgemein bekannt.

Entsprechend Erfindung ist das Nachklärbecken 6 mit einer Quelle 17 zum intensiven Mischen seines Inhalts versehen, oder im gegebenen Fall mit einer solchen verbunden, allerdings nur in festgesetzten, verhältnismässig kurzen Intervallen, wie noch beschrieben wird.

Die Quelle 17 zum intensiven Mischen wird vorteilhaft unmittelbar in der Schlammleitung 13 in Form einer Mammutpumpe gebildet, mit Wasserzuleitung, die auf den Luftverteiler 18 angeschlossen ist, wie auf Bild 5 dargestellt. Sie kann auch als eine mechanische Mischvorrichtung ausgeführt werden, die sich direkt nach dem Klärbecken 6 befindet, oder als Lavaldüse u.dgl.

Im Nachklärbecken 6 ist unter dem Betriebspegel 19, auf der Ebene des gesenkten Pegels 24, ein Absaugstutzen 20 angeordnet, angeschlossen über das Absaugrohr 21, durchgehend durch die Wand des Nachklärbeckens 6 bis zur Absaugpumpe 22, deren Ausfluss 23 sich oberhalb des Pegels der Einlaufzone 2 befindet.

Das Nachklärbecken 6 ist auch mit der Pumpe 25 zum Senken des Betriebspegels 19 auf die Höhe des gesenkten Pegels 24 versehen, wobei der Ausfluss 26 dieser Pumpe in die Abfuhr 16 mündet und dessen Eingang 27 leicht unter der Höhe des gesenkten Pegels 24 angeordnet ist. Es ist vorteilhaft, wenn sich auch die Pumpe 25 zur Senkung des Betriebspegels 19 im Nachklärbecken 6, und dadurch auch im Becken 1 als solchem befindet, wobei die Pumpe auch als Mammutpumpe ausgeführt und mit dem Luftverteiler 18 verbunden ist, wie auf Bild 5 ersichtlich.

Die Abfuhr 16 des geklärten Wassers ist mit seinem Eintrittsteil in den Abflussraum 30 des gereinigten Wassers eingemündet, der, wie auf Bild 4 ersichtlich, zum Teil mit einer Sektion der Wand des Nachklärbeckens 6 mit Durchgang 31 begrenzt ist, zum Teil mit einer Schrägwand 32 und Seitenwänden 33, 33' siehe Bild 1. Die angeführte Sektion der Wand des Nachklärbeckens 6 besitzt die Funktion einer Tauchwand, deren unterer Rand durch den oberen Rand des Durchgangs 31 bestimmt ist. Der untere Rand der Abfuhr 16 des geklärten Wassers bestimmt durch seinen Überfluss 34 die Höhe des Betriebspegels 19. Hinter dem Überfluss 34 ist der Ausgang 26 der Pumpe 25 zur Senkung des Betriebspegels 19 in die Abfuhr 16 eingemündet.

Wie bereits angeführt, werden die Quelle 17 des intensiven Mischens, die Rezirkulationspumpe 14, die Absaugpumpe 22 und die Pumpe 25 zum Senken des Betriebspegels 19 durch selbständige Zuleitungen von Druckluft mit dem Luftverteiler 18 verbunden, der pneumatisch an die Druckluftquelle 28 angeschlossen ist, die, gemeinsam mit dem Luftverteiler 18, von der Steuereinheit 29 gesteuert wird, die programmierbar ist und zur Steuerung der Funktion der obigen Mammutpumpen adaptiert wurde.

Das Nachklärbecken mit den anderen beschriebenen Einbauten ist als Montagegruppe ausgeführt, die auf Haltern 35, 35', die im Becken 1 angeordnet sind, befestigt ist, was vom Gesichtspunkt der Herstellung, der Montage sowie der Anlagenreparatur vorteilhaft ist.

Das Verfahren zur biologischen Reinigung von Abwasser und die Arbeitsweise der Anlage sind wie folgt ausgelegt:

Das zu klärende Abwasser fliesst durch Zuleitung 5 in die Kläranlage 1, wo es vorerst mechanisch im Korb 4 zur mechanischen Vorreinigung vorgereinigt wird, fliesst in den Belebungsraum 10 über, wo es dem Prozess des biologischen Abbaus von Verunreinigungen mit Belebtschlamm unterworfen wird, wobei, je nach dem Verunreinigungscharakter und den erforderlichen Endparametem des gereinigten Wassers, dieser Prozess unter aeroben, anoxidischen, anaeroben Bedingungen, oder deren Kombinationen verlaufen kann. Vom Belebungsraum 10 fliesst das zu reinigende Wasser durch Einlaufaufsatz 9 und über den Einlaufzylinder 8 in das Nachklärbecken 6 , wo es zum Sedimentationstrennen des Schlammes vom gereinigten Wasser kommt, das von der Kläranlage durch Abfuhr 16 des gereinigten Wassers abgeführt wird. Der sedimentierte Schlamm wird durch die Schlammleitung 13 mittels Rezirkulationspumpe 14 für Schlamm_in die Einlaufzone 2 gepumpt und kehrt in den Belebungsraum 10 zurück, wo er sich an der Intensivierung des Prozesses des biologischen Abbaus von Verunreinigungen des Abwassers beteiligt, das durch Einlauf 5 in die Kläranlage einfliesst.

Die Minderung der Menge der unerwünschten schwimmenden Verunreinigungen sowie des Schlamms im oberen Bereich des Nachklärraumes im Nachklärbecken 6 kann in der Regel in zwei Phasen erfolgen.

In der ersten Phase, die bestens in der Zeit des minimalen Einlaufes des zu klärenden Abwassers in die Kläranlage, d.h. in der Nacht verläuft, gibt die Steuereinheit 29 entsprechend dem eingestellten Programm einen Befehl zur Inbetriebnahme der Pumpe 25, u.zw. für eine festgesetzte Pumpzeit.

Die Pumpe 25 pumpt einen Teil des geklärten Wassers vom Nachklärbecken 6 in die Abfuhr 16 von Reinwasser, wodurch der Betriebspegel 19 in der Kläranlage verhältnismässig schnell auf die Höhe des gesenkten Pegels 24 reduziert wird.

Dieses schlagartige Abpumpen eines Teils des Inhalts des Nachklärbeckens 6 bildet eine Reservekapazität in der Kläranlage, die gewährleistet, dass im Verlauf der folgenden zweiten Phase der Minderung der Menge der schwebenden Verunreinigungen, sowie während der Stabilisierung des diese zweite Phase folgenden Reinigungsprozesses kein unerwünschter Abfluss von der Kläranlage, und dadurch auch keine Verschlechterung ihrer Reinigungswirkung zustande kommt.

Die zweite Phase verläuft unmittelbar nach Beendigung der ersten Phase, d.h. nachdem die Pumpe 25 nach Erreichen des gesenkten Pegels 24 zum Stillstand kommt und die Quelle 17 des intensiven Mischens des Inhalts des Nachklärbeckens 6 in Betrieb gesetzt wird, was eine relativ kurze Zeit dauert. Im beschriebenen Fall ist diese Quelle 17 eine in der Schlammrohrleitung 13 integrierte Mammutpumpe, die durch die Steuereinheit 29 gesteuert und mit Luft durch die Druckluftquelle 28 über den Luftverteiler 18 befüllt wird. Nach diesem intensiven Mischvorgang kommt es zum schnellen Lösen der Schicht des herausgeschwommenen Belebtschlammes und der schwimmenden Verunreinigungen. Gleichzeitig kommt es dabei zum Herausmischen und zum Lösen der Gasphase, die den herausgeschwommenen Belebtschlamm auf der Oberfläche im Nachklärbecken 6 aufrechterhält. Gleichzeitig kommt es auch zum Trennen schwimmender Verunreinigungen vom herausgeschwommenen Belebtschlamm.

Beim beschriebenen System von Abwasserklärung, in dem für die Sedimentierung des Belebtschlammes ein vertikales Nachklärbecken 6 eingesetzt wird, kommt es auch auf diese Art und Weise zum intensiven Vermischen des Inhalts des Einlaufzylinders 8 im Nachklärbecken 6, was auch die Menge der Stoffe, die vom Einlaufzylinder 8 zu beseitigen sind, beträchtlich reduziert.

Nach dieser zweiten Phase ist es geeignet, nachdem der Belebtschlamm im Nachklärbecken 6 zum Teil sedimentiert ist und die schwebenden Verunreinigungen herausgeschwommen sind, in den beschriebenen Prozess eine weitere Phase zu integrieren, die im Absaugen der auf der Oberfläche schwimmenden Verunreinigungen vom Nachklärbecken 6 besteht. Dies erfolgt dadurch, dass auf Befehl der Steuereinheit 29 die Absaugpumpe 22 in Betrieb gesetzt wird, deren Absaugestutzen 20 vom noch gesenkten Pegel 24 des Nachklärbeckens 6 diese unerwünschten Verunreinigungen absaugt und in die Einlaufzone 2 bringt. Dann kommt die Absaugepumpe 22 zum Stillstand und die Kläranlage übergeht in das stabilisierte Regime.

Das oben beschriebene Verfahren und die Anlage ermöglichen eine minimierte Bedienung des Nachklärbeckens vom Gesichtspunkt der Beseitigung schwimmender Verunreinigungen sowie des Belebtschlammes bei gleichzeitiger wesentlicher Verbesserung der Funktion und der Parameter einer biologischen Kläranlage.

Die beschriebene Anwendung des Verfahrens entsprechend der Erfindung und die Anlage zur Durchführung desselben ist keinerlei auf das oben beschriebene Beispiel beschränkt. Sie sind auch für Kläranlagen geeignet, bei denen die einzelnen Funktionsräume, bzw. Baugruppen, in keinem gemeinsamen Becken angeordnet sind.

## Patentansprüche

1. Verfahren zur biologischen Reinigung von Abwasser, in dessen Verlauf das zu klärende Wasser nach seiner mechanischen Vorreinigung (4) einem Prozess der biologischen Beseitigung der Verunreinigung durch Belebtschlamm unterworfen wird, unter Bedingungen, die aerobisch und/oder anoxid und/oder anaerobisch sind, mit einer darauffolgenden Sedimentierung, wobei der Betebtschlamm in den Reinigungsprozess zurückgeführt (13) und der eventuelle Überschuss außerhalb dieses Prozesses abgeführt wird und das getrennte, geklärte Wasser den Reinigungsprozess verlässt, wobei das getrennte Wasser im Verlauf des Klärprozesses zu bestimmten Zeitintervallen vom Separationsprozess (6) abgepumpt und die Sedimentation des restlichen Teils nachfolgend durch intensives Vermischen gestört wird (17), mit nachfolgender Fortsetzung des Sedimentationsprozesses, und die Menge des zu bestimmten Intervallen abgepumpten Wassers etwa dem vorausgesetzten stoßartigen Einlauf des zu reinigenden Abwassers in den Reinigungsprozess während der Pumpzeit von Wasser aus dem Nachklärbecken (6), des intensiven Mischens und der folgenden Stabilisierung des Klärprozesses entspricht, und wobei nach der Zerstörung der Sedimentation schwimmende Verunreinigungen aus dem Separationsprozess (6) abgeführt und in den Belebungsprozess zurückgeführt werden,
**dadurch gekennzeichnet,**
**dass** die schwimmenden Verunreinigungen von der Oberfläche (24) eines abgesenkten Wassers abgesaugt werden und dass die Absenkung des Wassers vom Arbeitspegel (19) auf den Absenkungspegel (24) schlagartig vorgenommen wird.

2. Vorrichtung zur Durchführung des Verfahrens nach Anspruch 1, mit einem Becken (1), das eine Einlaufzone (2), einen in der Einlaufzone (2) des Beckens (1) angeordneten Korb (4) zur mechanischen Vorreinigung mit vorgeschaltetem Einlauf des zu reinigenden Abwassers, einen Belebungsraum (10) mit Belüftungselementen (11), ein Nachklärbecken (6) mit einem Einlaufzylinder (8), eine Rezirkulationspumpe (13) für den Schlamm zum Pumpen des Belebtschlamms vom Boden des Nachklärbeckens (6) in die Einlaufzone (2) des Belebungsraums (1), einen Abfluss (27, 16) für das geklärte Wasser und einen Absaugstutzen (20) im Nachklärbecken (6) zum Absaugen schwimmender Verunreinigungen besitzt, wobei der Absaugstutzen (20) an einer Absaugpumpe (22) mit einem Ausfluss (23) oberhalb des Pegels (19) der Einlaufzone (2) angeordnet ist,
**dadurch gekennzeichnet,**
**dass** das Nachklärbecken (6) mit einer Quelle (17) zum intensiven Mischen seines Inhalts versehen bzw. an diese Quelle angeschlossen ist, dass das Nachklärbecken (6) an eine Pumpe (25) zur Absenkung des Betriebspegels (19) angeschlossen ist, deren Ausfluss (26) in den Abfluss (16) mündet, und dass der im Nachklärbecken (6) angeordnete Absaugstutzen (20) zur Absaugung schwimmender Verunreinigungen in Höhe der abgesenkten Wasseroberfläche (24) angeordnet ist.

3. Vorrichtung nach Anspruch 2, **dadurch gekennzeichnet, dass** die Pumpe (25) zum Senken des Betriebspegels, die Quelle (17) des intensiven Vermischens des Inhalts des Nachklärbeckens, die Absaugpumpe (22) und die Rezirkulationspumpe (14) für Schlamm als Mammutpumpen ausgeführt sind.

4. Vorrichtung nach Anspruch 2, **dadurch gekennzeichnet, dass** die Einlaufzone (2), in der der Korb (4) zur mechanischen. Vorreinigung angeordnet ist, durch eine Tauchwand (3) räumlich begrenzt ist.

5. Vorrichtung nach Anspruch 2, **dadurch gekennzeichnet, dass** im Eintrittsteil der Abfuhr (16) des geklärten Wassers, in den Abflussraum (30) mündend, ein Überlauf (34) gebildet ist, der die Höhe des Betriebspegels (19) definiert, und dahinter die Pumpe (25) zur Senkung des Betriebspegels (19) mündet, wobei der Abflussraum (30) durch einen Teil des Nachklärbeckenmantels (6) abgegrenzt ist, der einen Durchgang (31), eine Schrägwand (32) und Seitenwände (33), (33') besitzt.

6. Vorrichtung nach Anspruch 2 und 3, **dadurch gekennzeichnet, dass** die Quelle (17) zur intensiven Mischung des Inhalts des Nachklärbeckens (6), die Rezirklulationspumpe (14) für Schlamm, die Pumpe (25) zur Senkung des Betriebspegels (19) sowie die Absaugpumpe auf einen mit einer Druckluftquelle (28) verbundenen Luftverteiler (18) angeschlossen sind, wobei der luftverteiler (18) und die Druckluftquelle (28) von einer programmierbaren Steuereinheit (29) gesteuert werden.

## Claims

1. Method for the biological purification of waste water, in the course of which the water to be clarified is subjected, after mechanical pre-purification (4), to a process of biological elimination of the impurities by means of activated sludge, under aerobic and/or anoxide and/or anaerobic conditions, with subsequent sedimentation, in which method the activated sludge is returned to the purification process (13) and the possible excess is removed from this process, and the separated, clarified water leaves the purification process, the separated water being pumped away in the course of the clarification process at defined intervals of time from the separation process (6) and the sedimentation of the remaining portion being subsequently disturbed (17) by intensive mixing, with subsequent continuation of the sedimentation process, and the amount of the water pumped away at defined intervals corresponding roughly to the required sudden inflow into the purification process of the waste water to be purified during the time of pumping water from the final sedimentation tank (6), during the intensive mixing and the following stabilisation of the clarification process, and, after the sedimentation has been destroyed, floating impurities being led away from the separation process (6) and returned to the activation process,
**characterised in that**
the floating impurities are sucked from the surface (24) of a lowered volume of water and the water is suddenly lowered from the operating level (19) to the lowered level (24).

2. Apparatus for accomplishing the method according to claim 1, comprising a tank (1) which has an inlet zone (2), a basket (4), arranged in the inlet zone (2) of the tank, for mechanical pre-purification and having an upstream inlet for the waste water to be purified, an activation space (10) having aerating elements (11), a final sedimentation tank (6) having a feed cylinder (8), a sludge recirculation pump (13) to pump the activated sludge from the base of the final sedimentation tank (6) into the inlet zone (2) of the activation space (1), an outflow (27, 16) for the clarified water and a suction connection piece (20) in the final sedimentation tank (6) for sucking off floating impurities, the suction connection piece (20) being arranged on a suction pump (22) having an outflow (23) above the level (19) of the inlet zone (2),
**characterised in that**
the final sedimentation tank (6) is provided with a source (17) for intensive mixing of its contents, or is connected to this source, **in that** the final sedimentation tank (6) is connected to a pump (25) for lowering the operating level (19), the outflow (26) of which pump opens into drain (16), and **in that**, for sucking off floating impurities, the suction connection piece (20) arranged in the final sedimentation tank (6) is disposed at the height of the lowered water surface (24).

3. Apparatus according to claim 2, **characterised in that** the pump (25) for lowering the operating level, the source (17) of the intensive mixing of the contents of the final sedimentation tank, the suction pump (22) and the sludge recirculation pump (14) are designed as airlift pumps.

4. Apparatus according to claim 2, **characterised in that** the inlet zone (2), in which the basket (4) for the mechanical pre-purification is arranged, is spatially delimited by a dipping wall (3).

5. Apparatus according to claim 2, **characterised in that** in the entry portion of the drain (16) for the clarified water, opening into the outflow space (30), an overflow (34) is formed which defines the height of the operating level (19), and behind it the pump (25) for lowering the operating level (19) opens out, the outflow space (30) being delimited by a portion of the jacket of the final sedimentation tank (6) which has a passage (31), a slanting wall (32) and side walls (33), (33').

6. Apparatus according to claims 2 and 3, **characterised in that** the source (17) for the intensive mixing of the contents of the final sedimentation tank (6), the sludge recirculation pump (14), the pump (25) for lowering the operating level (19) and the suction pump are in communication with an air diffuser (18) connected to a source of compressed air (28), the air diffuser (18) and the source of compressed air (28) being controlled by a programmable control unit (29).

## Revendications

1. Procédé de purification biologique d'eaux usées, au cours duquel les eaux à clarifier sont soumises après LEUR prépurification mécanique (4), à un procédé d'élimination biologique des impuretés par une boue activée, dans des conditions qui sont aérobies et/ou anoxydes et/ou anaérobies, avec une sédimentation suivante, où la boue activée est ramenée dans le processus de purification (13) et l'excès éventuel est évacué de ce procédé et l'eau clarifiée, séparée quitte le processus de purification, où l'eau séparée est pompée, au cours du processus de clarification, depuis le processus de séparation à intervalles de temps déterminés et la sédimentation de la partie résiduelle est ensuite perturbée par mélange important (17), avec la poursuite du processus de sédimentation, et la quantité d'eau pompée à intervalles déterminés correspond environ à l'entrée intermittente supposée des eaux résiduaires à purifier dans le processus de purification pendant la durée de pompage de l'eau depuis les bassins de décantation finale (6), le mélange important et la stabilisation suivante du processus de clarification, et où après perturbation de la sédimentation, les impuretés flottantes sont évacuées du processus de séparation (6) et ramenées dans le processus d'épuration par boues activées, **caractérisé en ce que** les impuretés flottantes sont aspirées de la surface (24) d'une eau abaissée et **en ce que** l'abaissement de l'eau est effectué brusquement depuis le niveau de travail (19) jusqu'au niveau d'abaissement (24).

2. Dispositif de réalisation du procédé selon la revendication 1, avec un bassin (1), qui possède une zone d'entrée (2), un récipient (4) disposé dans la zone d'entrée (2) du bassin, pour la purification mécanique avec entrée précédente des eaux résiduaires à purifier, un espace d'épuration par boues activées (10) avec éléments d'aération (11), un bassin de décantation finale (6) avec un cylindre d'entrée (8), une pompe de recirculation (13) pour la boue à pomper de la boue activée du fond du bassin de décantation finale (6) dans la zone d'entrée (2) de l'espace d'épuration par boues activées (10), une sortie (27, 16) pour l'eau clarifiée et un orifice d'aspiration (20) dans le bassin de décantation finale (6) pour l'aspiration des impuretés flottantes, où l'orifice d'aspiration (20) est disposé sur une pompe d'aspiration (22) avec un écoulement (23) au-dessus du niveau (19) de la zone d'entrée (2), **caractérisé en ce que** le bassin de décantation finale (6) est muni d'une source (17) pour le mélange important de son contenu ou raccordée à cette source, de sorte que le bassin de décantation finale (6) est raccordé à une pompe (25) pour abaisser le niveau de fonctionnement (19), dont l'écoulement (26) débouche dans la décharge (16), et **en ce que** l'orifice d'aspiration (20) disposé dans le bassin de décantation finale (6) est disposé à hauteur de la surface de l'eau à abaisser (24) pour aspirer les impuretés flottantes.

3. Dispositif selon la revendication 2, **caractérisé en ce que** la pompe (25) pour abaisser le niveau de fonctionnement, la source (17) du mélange important du contenu du bassin de décantation finale, la pompe d'aspiration (22) et la pompe de recirculation (14) de la boue sont équipées comme des élévateurs d'eau à air comprimé.

4. Dispositif selon la revendication 2, **caractérisé en ce que** la zone d'entrée (2), dans laquelle est disposé le récipient (4) pour la prépurification mécanique, est spatialement limitée par un mur de retenue pour corps flottants.

5. Dispositif selon la revendication 2, **caractérisé en ce que** dans la partie d'entrée de la décharge (16) de l'eau clarifiée, est formé un trop-plein (34), débouchant dans l'espace de décharge (30), qui définit la hauteur du niveau de fonctionnement (19) et qui débouche derrière la pompe (25) pour abaisser le niveau de fonctionnement (19), où l'espace de décharge (30) est limité par une partie du manteau du bassin de décantation finale (6), qui possède un passage (31), une paroi oblique (32) et des parois latérales (33), (33').

6. Dispositif selon les revendications 2 et 3, **caractérisé en ce que** la source (17) pour le mélange important du contenu du bassin de décantation finale (6), la pompe de recirculation (14) pour la boue, la pompe (25) pour abaisser le niveau de fonctionnement (19), ainsi que la pompe d'aspiration sont raccordées à un distributeur d'air (18) relié à une source d'air comprimé (28), où le distributeur d'air (18) et la source d'air comprimé (28) sont réglés par une unité programmable de réglage.
